# EUROPÄISCHE PATENTSCHRIFT

(11) **EP 2 415 143 B1**
(45) Veröffentlichungstag und Bekanntmachung des Hinweises auf die Patenterteilung: **10.05.2017**
(21) Anmeldenummer: 10712700.3
(22) Anmeldetag: 17.03.2010
(51) Int. Cl.: H02K 11/04, H02K 19/36, H02K 11/00

(54) **ELEKTROMASCHINE**
ELECTRIC MACHINE
MACHINE ÉLECTRIQUE

(30) Priorität: 30.03.2009 DE 102009014960
(43) Veröffentlichungstag der Anmeldung: 08.02.2012
(73) Patentinhaber: SEW-EURODRIVE GmbH & Co. KG, 76646 Bruchsal (DE)
(72) Erfinder: SCHMIDT, Josef, 76676 Graben-Neudorf (DE); MAHLEIN, Jochen, 76139 Karlsruhe (DE)
(86) Internationale Anmeldenummer: PCT/EP2010/001660
(87) Internationale Veröffentlichungsnummer: WO 2010/112139

(56) Entgegenhaltungen:
- WO-A2-01/58005
- WO-A2-97/09596
- CH-A- 373 460
- DE-A1-102005 047 541
- DE-A1-102007 030 963
- US-A- 3 577 002
- US-A- 3 758 845

## Beschreibung

Die Erfindung betrifft einen Elektromaschine.

Es ist bekannt, bei fremderregten Synchronmaschinen, eine Erregerfeldwicklung am Rotor vorzusehen.

Der Erfindung liegt daher die Aufgabe zugrunde, einen möglichst kompakten Motor bei hoher Funktionalität weiterzubilden.

Aus der CH 373 460 A Ist eine fremderregte Synchronmaschine bekannt, bei der eine Gleichrichterschaltung mimt Dioden von den Umlenkbereichen der Erregerwicklung überragt wird.

Aus der US 3 577 002 A Ist eine Gleichrichtung und Speisung der Erregerwicklung einer fremderregte Synchronmaschine bekannt.

Aus der DE 10 2007 030963 A1 ist eine wärmeleitende Vergussmasse zwischen einer Erregerschaltung und einem Rotorkörper bekannt.

Aus der WO 97109596 A2 ist die Verwendung von Oberflächenwellensensoren zur Drehmomentmessung auf Rotoren elektrischer Maschinen bekannt.

Aus der WO 01/58005 A2 ist bekannt, berührungslos Energie und Daten an einen Erregerkreis einer fremderregten Synchronmaschine.

Aus der DE 10 2005 047 541 A1 ist ein Verfahren zur Energlezufuhr zu und aus einer ohmsch-induktiven Last bekannt.

Aus der US 3 758 845 A ist bekannt, eine berührungslose Datenübertragung zwischen Rotor und Stator auszuführen.

Erfindungsgemäß wird die Aufgabe bei der Elektromaschine nach den in Anspruch 1 angegebenen Merkmalen gelöst.

Wichtige Merkmale der Erfindung bei der Elektromaschine sind, dass sie, insbesondere Fremderregte Synchronmaschine, am Rotor der Maschine eine Erregerwicklung, insbesondere umfassend Feldspulen, auf einem Blechpaket aufweist.

wobei der Wickelkopf der Erregerwicklung, also die Umlenkbereiche der Erregerwicktungsleitungen, axial über das Blechpaket hinausragen
wobei im Überragungsbereich eine elektronische Schaltung vorgesehen ist,
also die elektronische Schaltung radial im Bereich der axial herausragenden Wickelköpfe vorgesehen ist.

Von Vorteil ist dabei, dass kein zusätzlicher Bauraum für die elektronische.Schaltung vorzusehen ist. Außerdem ist die Wärmeabfuhr ans Blechpaket des Rotors optimiert ausführbar, insbesondere bei zusätzlicher Einbringung von wärmeleitenden Mitteln, wie Vergussmasse.

Es ist an der der elektronischen Schaltung gegenüberliegenden axialen Seite des Rotors eine Sekundärwicklung und mit ihr verbundene weitere elektronische Schaltung, insbesondere Leistungselektronik, vorgesehen. Von Vorteil ist dabei, dass die Wärme dieser Komponenten ans Rotorblechpaket und von dort über die Welle an die Umgebung oder teilweise auch die umgebende Luft im Innenraum der Maschine ableitbar ist. Außerdem sind verschiedene Funktionalitäten, wie beispielsweise Messwerterfassung mit Datenübertragung, direkt am Rotor anbringbar ohne zusätzlich notwendiges Bauvolumen.

Bei einer vorteilhaften Ausgestaltung ist der Sekundärwicklung axial und/oder radial gegenüberstehend eine Primärwicklung angeordnet, die insbesondere mit der Sekundärwicklung induktiv gekoppelt vorgesehen ist. Von Vorteil ist dabei, dass eine hohe Leistung übertragbar ist, die Erregerwicklung berührungslos versorgbar ist und bei axial gegenüberstehender Anordnung das Bauvolumen nicht vergrößert ist. da die Primärwicklung im axialen Bereich des Lagers der Motorwelle anordenbar ist, also das Lager radial umgebend.

Es ist wärmeleitende Vergussmasse, zumindest zwischen elektronischer Schaltung und Blechpaket oder zumindest zwischen weiterer elektronischer Schaltung, Sekundärwicklung und/oder Blechpaket vorgesehen. Von Vorteil ist dabei, dass die Unwucht mittels der Vergussmasse verringerbar ist und außerdem die Wärmeableitung verbessert ist, insbesondere lokale Spitzentemperaturen reduzierbar sind.

Es ist die elektronische Schaltung mit einem Sensor zur Erfassung eines Wertes einer physikalischen Größe des Motors verbunden, insbesondere zur Erfassung eines Wertes des Drehmoments, der Winkellage des Rotors, der Drehzahl des Rotors, der Winkelbeschleunigung des Rotors und/oder der Temperatur des Rotors. Von Vorteil ist dabei, dass Werte der Elektromaschine direkt erfassbar sind und die Messwerte berührungslos an den stationären Teil übermittelbar sind. Insbesondere ist auch eine Beeinflussung der die Erregerwicklung versorgenden Leistungselektronik auf dem Rotor derart ausführbar, dass der der Erregerwicklung zugeführte Strom in Abhängigkeit von den Messwerten beeinflusst wird. Hierzu ist es beispielsweise vorteilhaft, wenn der Strom der Sekundärwicklung einem steuerbaren,Gleichrichter oder der Strom der Sekundärwicklung einem Gleichrichter, welcher ein Leistungsstellglied speist, zugeführt wird, so dass die der Erregerwicklung zugeführte Leistung oder der der Erregerwicklung zugeführte Strom steuerbar ist. Somit ist es dann ermöglicht, dass abhängig vom Messwert der Erregerstrom verändert wird, um eine Regelung auf einen Sollwert hin zu realisieren.

Bei einer vorteilhaften Ausgestaltung sind Mittel zur Datenübertragung zwischen der elektronischen Schaltung und dem stationären Teil des Motors vorgesehen. Von Vorteil ist dabei, dass aufgrund der Messwerte der Strom in der Primärwicklung beeinflussbar ist, wodurch eine Regelung auf einen Sollwert hin ausführbar ist.

Bei einer vorteilhaften Ausgestaltung umfassen Mittel zur Datenübertragung einen mittels Radarwellen abfragbaren Oberflächenwellensensor. Von Vorteil ist dabei, dass eine berührungslose Abfrage von Messwerten direkt am Sensor ermöglicht ist. Dabei wird der Oberflächenwellensensor aus der Energie des Abfragesignals, insbesondere aus dem Abfragepuls, versorgt und ein Antwortsignal, insbesondere Antwortimpuls erzeugt, der die Information über den Messwert enthält.

Bel einer vorteilhaften Ausgestaltung umfassen Mittel zur Datenübertragung Mittel zur Aufmodulation höherer Stromanteile, die über die induktive Kopplung übertragen werden. Von Vorteil ist dabei, dass kein zusätzlicher Übertrager notwendig ist für die Informationsübertragung. Außerdem ist die Übertragung der Messwerte slörsicher ausführbar.

Bei einer vorteilhaften Ausgestaltung umfassen die Mittel zur Datenübertragung zumindest eine weitere Wicklung am Rotor und/oder am Stator, die miteinander induktiv gekoppelt sind. Von Vorteil ist dabei, dass eine noch störsicherere Übertragung der Messwertinformation ausführbar ist.

Weitere Vorteile ergeben sich aus den Unteransprüchen.

### Bezugszeichenliste

- 1: elektronische Schaltung
- 2: Lager
- 3: Welle
- 4: Wickelkopf der Erregerwicklung 5
- 5: Erregerwicklung
- 6: Statorwicklung
- 7: Sekundärwicklung mit Leistungselektronik
- 8: Versorgungsanschlüsse
- 9: Lager
- 10: Primärspule
- 11: Vergussmasse
- 12: Statorwicklung

Die Erfindung wird nun anhand von Abbildungen näher erläutert:

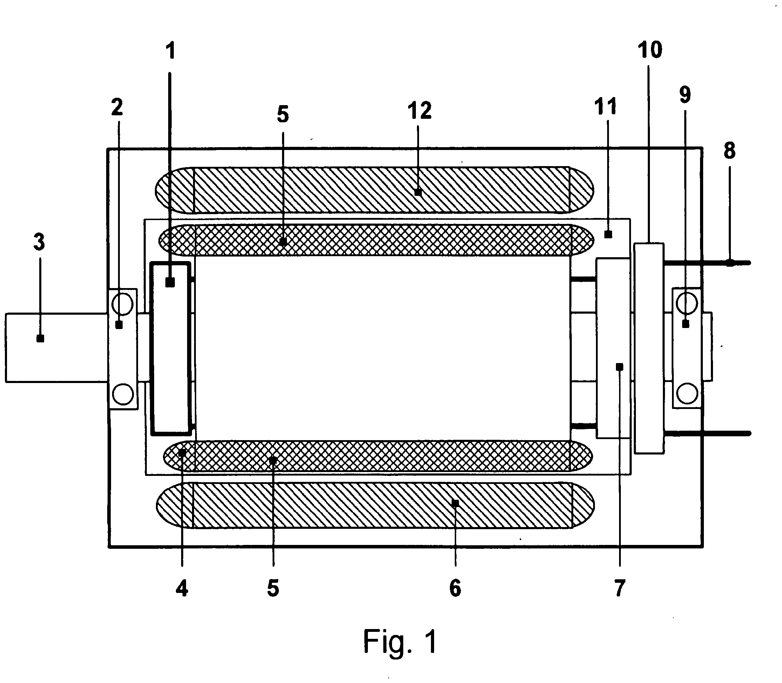

In der Figur 1 ist eine erfindungsgemäße Vorrichtung schematisch dargestellt. Hierbei ist ein Elektromotor gezeigt, der in seinem Gehäuse eine Statorwicklung 6 aufweist.

Am Gehäuse des Elektromotors ist auch über Lager (2, 9) eine Welle 3 gelagert, die auf einem mit ihr drehfest verbundenen Rotorblechpaket eine Erregerwicklung 5 trägt, deren Umlenkbereich der Wicklungsleitungen, also deren Wickelkopf 4, axial aus dem mit der Welle verbundenen Rotorblechpaket heraussteht.

Am Rotor ist außerdem eine elektronische Schaltung 1 vorgesehen, die radial innerhalb der Wickelköpfe angeordnet ist und somit keinen zusätzlichen axialen Bauraum benötigt. Die Entwärmung der elektronischen Schaltung ist über das mit ihr verbundene Rotorblechpaket ermöglicht, wobei die Befestigungsmittel gleichzeitig auch die Wärmeableitung an das Rotorblechpaket ermöglichen. Der Wärmeübergangswiderstand von der elektronischen Schaltung 1 zum Rotorblechpaket ist also geringer als der Wärmeübergangswiderstand von der elektronischen Schaltung 1 zur umgebenden Luft.

Die elektronische Schaltung 1 ist am ersten axialen Endbereich des Rotorblechpakets.

Die Erregerwicklung 5 besteht aus einer oder mehreren Feldspulenwicklungen, so dass der Elektromotor als fremderregte Synchronmaschine betreibbar ist. Die Bestromung der Feldspulen erfolgt mit einem unipolaren Strom, der aus einem Gleichrichter zur Verfügung gestellt wird, welcher am Rotor vorgesehen ist. Dabei ist der Gleichrichter von der Leistungselektronik umfasst, wo auch eine den Gleichrichter speisende Sekundärwicklung 7 vorgesehen ist. Die Leistungselektronik samt Sekundärwicklung 7 ist am ersten axialen Endbereich des Rotorblechpakets gegenüberliegenden axialen Endbereich vorgesehen.

Somit wird die Wärme der Sekundärspule und der Leistungselektronik 7 an das Rotorblechpaket abgeführt.

Die elektronische Schaltung 1 sowie auch die Sekundärspule und die Leistungselektronik 7 sind mittels Vergussmasse mit dem Rotorblechpaket wärmeleitend verbunden. Die Vergussmasse 11 umgibt auch die Erregerwicklung 5 und trägt somit nicht nur zur mechanischen Festigkeit und Stabilität gegen Rüttelschwingungen bei sondern auch zur Wärmeableitung. Die Wärmeableitung geschieht insbesondere auch vom Rotorblechpaket über die Welle 3 zur Umgebung hin.

Die Primärwicklung 10 ist in Figur 1 der Sekundärwicklung 7 axial gegenüber stehend angeordnet. Alternativ ist aber auch ein radiales Gegenüberstehen vorteilhaft, wobei die Primärwicklung 10 und die Sekundärwicklung 7 als Ringwicklungen ausgeführt sind und die Primärwicklung 10 die Sekundärwicklung 7 radial umgibt.

Die Primärwicklung 10 wird vorzugsweise mit einem Wechselstrom zwischen 10 und 500 kHz beaufschlagt, der ihr über die Versorgungsanschlüsse 8 zugeführt wird. Der Sekundärwicklung ist vorzugsweise eine Kapazität in Reihe oder parallel zugeschaltet, so dass die zugehörige Resonanzfrequenz im Wesentlichen der Frequenz des eingespeisten Wechselstroms entspricht.

Die elektronische Schaltung 1 ist auch mit Sensoren zur Erfassung des Drehmoments, der Winkellage des Rotors, der Drehzahl des Rotors, der Winkelbeschleunigung des Rotors und/oder der Temperatur des Rotors verbunden. Somit ist auf dem drehenden Rotor die Erfassung von Werten von physikalischen Größen ermöglicht. Die Werte werden übertragen an die stationäre Seite, indem Funkwellen oder Infrarot verwendet wird. Alternativ ist auch eine Aufmodulation beziehungsweise Demodulation höher frequenter Stromanteile auf die beziehungsweise von der Sekundärwicklung und/oder Primärwicklung ausführbar, um eine Datenübertragung zu erzielen. Weiter alternativ ist auch die Verwendung von funkabfragbarer Oberflächenwellensensoren ermöglicht.

Die Vergussmasse 11 bewirkt auch eine Reduzierung der Unwucht des Rotors und schützt die empfindliche elektronische Schaltung 1 sowie die Sekundärspule mit Leistungselektronik 7. Darüber hinaus bewirkt sie eine gleichmäßigere Wärmeverteilung im Rotor und trägt somit zur Verbesserung der Entwärmung des Rotors bei. Lokale Spitzentemperaturen sind somit reduzierbar.

## Patentansprüche

1. Elektromaschine, insbesondere Fremderregte Synchronmaschine,
wobei
am Rotor der Maschine eine Erregerwicklung (5), insbesondere umfassend Feldspulen, auf einem Blechpaket vorgesehen ist,
wobei der Wickelkopf (4) der Erregerwicklung (5), also die Umlenkbereiche der Erregerwicklungsleitungen, axial, also in Richtung der Rotorachse über das Blechpaket hinausragen,
wobei in diesem Überragungsbereich eine elektronische Schaltung (1) vorgesehen ist,
so dass die elektronische Schaltung (1) in radialer Richtung von den Umlenkbereichen überdeckt ist, so dass also die elektronische Schaltung (1) radial im Bereich der axial herausragenden Wickelköpfe vorgesehen Ist,
**dadurch gekennzeichnet, dass** an dem der elektronischen Schaltung (1) gegenüberliegenden axialen Endbereich des Rotors eine Sekundärwicklung (7) und mit ihr verbundene weitere elektronische Schaltung vorgesehen ist,
wobei wärmeleitende Vergussmasse (11) zumindest zwischen elektronischer Schaltung und Blechpaket oder zumindest zwischen weiterer elektronischer Schaltung, Sekundärwicklung (7) und/oder Blechpaket vorgesehen ist,
wobei die elektronische Schaltung (1) mit einem Sensor zur Erfassung eines Wertes einer physikalischen Größe des Motors verbunden ist.

2. Elektromaschine nach mindestens einem der vorangegangenen Ansprüche, **dadurch gekennzeichnet, dass**
die weitere elektronische Schaltung eine Leistungselektronik ist.

3. Elektromaschine nach mindestens einem der vorangegangenen Ansprüche, **dadurch gekennzeichnet, dass**
der Sekundärwicklung (7) axial und/oder radial gegenüberstehend eine Primärwicklung angeordnet ist, insbesondere die mit der Sekundärwicklung (7) induktiv gekoppelt vorgesehen ist.

4. Elektromaschine nach mindestens einem der vorangegangenen Ansprüche, **dadurch gekennzeichnet, dass**
der Sensor zur Erfassung eines Wertes des Drehmoments, der Winkellage des Rotors, der Drehzahl des Rotors, der Winkelbeschleunigung des Rotors und/oder der Temperatur des Rotors vorgesehen ist.

5. Elektromaschine nach mindestens einem der vorangegangenen Ansprüche, **dadurch gekenntzeichnet, dass**
Mittel zur Datenübertragung zwischen der elektronischen Schaltung und dem stationären Teil des Motors vorgesehen sind.

6. Elektromaschine nach mindestens einem der vorangegangenen Ansprüche,
**dadurch gekennzeichnet, dass**
Mittel zur Datenübertragung einen mittels Radarwellen abfragbaren Oberflächenwellensensor umfassen.

7. Elektromaschine nach mindestens einem der vorangegangenen Ansprüche,
**dadurch gekennzeichnet, dass**
Mittel zur Datenübertragung Mittel zur Aufmodulation höherer Stromanteile umfassen, die über die induktive Kopplung übertragen werden.

8. Elektromaschine nach mindestens einem der vorangegangenen Ansprüche,
**dadurch gekennzeichnet, dass**
die Mittel zur Datenübertragung zumindest eine weitere Wicklung am Rotor und/oder am Stator umfassen, die miteinander induktiv gekoppelt sind.

9. Elektromaschine nach mindestens einem der vorangegangenen Ansprüche,
**dadurch gekennzeichnet, dass**
bei axial gegenüberstehender Anordnung der Primärwicklung zur Sekundärwicklung (7) die Primärwicklung im axialen Bereich eines Lagers der Motorwelle anordenbar ist, insbesondere also das Lager radial umgebend anordenbar ist.

10. Elektromaschine nach mindestens einem der vorangegangenen Ansprüche,
**dadurch gekennzeichnet, dass**
aus der Sekundärwicklung (7) ein Leistungsstellglied gespeist wird, mittels welchem die der Erregerwicklung (5) zugeführte Leistung steuerbar ist, insbesondere wobei ein erfasster Messwert auf einen Sollwert hin regelbar ist.

## Claims

1. Electrical machine, in particular separately excited synchronous machine,
wherein
an exciter winding (5), in particular comprising field coils, is provided on the rotor of the machine on a laminated core,
wherein the winding head (4) of the exciter winding (5), i.e. the deflection regions of the exciter winding conductors, protrude axially, i.e. in the direction of the rotor axis, beyond the laminated core,
wherein an electronic circuit (1) is provided in this protrusion region,
so that the electronic circuit (1) is covered in the radial direction by the deflection regions, so that the electronic circuit (1) is thus provided radially in the region of the axially protruding winding heads,
**characterised in that**
at the axial end region of the rotor opposite the electronic circuit (1), there is provided a secondary winding (7) and connected to it a further electronic circuit,
wherein thermally conductive sealing compound (11) is provided at least between the electronic circuit and laminated core or at least between the further electronic circuit, secondary winding (7) and/or laminated core,
wherein the electronic circuit (1) is connected to a sensor for detecting a value of a physical quantity of the motor.

2. Electrical machine according to at least one of the preceding claims,
**characterised in that**
the further electronic circuit is power electronics.

3. Electrical machine according to at least one of the preceding claims,
**characterised in that**
axially and/or radially opposite the secondary winding (7) there is arranged a primary winding, in particular which is provided inductively coupled to the secondary winding (7).

4. Electrical machine according to at least one of the preceding claims,
**characterised in that**
the sensor is provided for detecting a value of the torque, of the angular position of the rotor, of the rotational speed of the rotor, of the angular acceleration of the rotor and/or of the temperature of the rotor.

5. Electrical machine according to at least one of the preceding claims,
**characterised in that**
means for data transmission between the electronic circuit and the stationary part of the motor are provided.

6. Electrical machine according to at least one of the preceding claims,
**characterised in that**
means for data transmission comprise a surface wave sensor interrogatable by means of radar waves.

7. Electrical machine according to at least one of the preceding claims,
**characterised in that**
means for data transmission comprise means for modulation of higher current components which are transmitted via the inductive coupling.

8. Electrical machine according to at least one of the preceding claims,
**characterised in that**
the means for data transmission comprise at least one further winding on the rotor and/or on the stator which are inductively coupled with each other.

9. Electrical machine according to at least one of the preceding claims,
**characterised in that**
in the case of axially opposite arrangement of the primary winding to the secondary winding (7), the primary winding is arrangeable in the axial region of a bearing of the motor shaft, i.e. in particular the bearing is arrangeable radially surrounding.

10. Electrical machine according to at least one of the preceding claims,
**characterised in that**
from the secondary winding (7) a power actuator is fed, by means of which the power supplied to the exciter winding (5) is controllable, in particular wherein a detected measured value is regulatable to a target value.

## Revendications

1. Machine électrique, en particulier machine synchrone à excitation externe, un enroulement excitateur (5), incluant notamment des bobines de champ, étant prévu sur un empilage de tôles sur le rotor de ladite machine,
la tête de bobinage (4) de l'enroulement excitateur (5), c'est-à-dire les zones de renvoi des conducteurs dudit enroulement excitateur, faisant saillie au-delà dudit empilage de tôles dans le sens axial, c'est-à-dire dans la direction de l'axe du rotor,
un circuit électronique (1) étant prévu, dans cette région en saillie,
de façon telle que le circuit électronique (1) soit recouvert par lesdites zones de renvoi, dans la direction radiale, c'est-à-dire de façon telle que ledit circuit électronique (1) soit prévu, radialement, dans la région des têtes de bobinage faisant saillie dans le sens axial, **caractérisée par le fait**
**qu'**un enroulement secondaire (7), et un circuit électronique supplémentaire connecté à ce dernier, sont prévus sur la région extrême axiale du rotor qui est située à l'opposé du circuit électronique (1),
une masse de scellement (11) thermoconductrice étant prévue au moins entre ledit circuit électronique et l'empilage de tôles, ou au moins entre ledit circuit électronique supplémentaire, ledit enroulement secondaire (7) et/ou ledit empilage de tôles,
ledit circuit électronique (1) étant raccordé à un capteur conçu pour détecter une valeur d'une grandeur physique du moteur.

2. Machine électrique selon au moins l'une des revendications précédentes, **caractérisée par le fait que**
le circuit électronique supplémentaire est une électronique de puissance.

3. Machine électrique selon au moins l'une des revendications précédentes, **caractérisée par le fait**
**qu'**un enroulement primaire, disposé axialement et/ou radialement en vis-à-vis de l'enroulement secondaire (7), est notamment prévu avec couplage inductif audit enroulement secondaire (7).

4. Machine électrique selon au moins l'une des revendications précédentes, **caractérisée par le fait que**
le capteur est prévu pour détecter une valeur du couple de rotation, de la position angulaire du rotor, de la vitesse angulaire dudit rotor, de l'accélération angulaire dudit rotor et/ou de la température dudit rotor.

5. Machine électrique selon au moins l'une des revendications précédentes, **caractérisée par le fait que**
des moyens, affectés à la transmission de données, sont prévus entre le circuit électronique et la partie stationnaire du moteur.

6. Machine électrique selon au moins l'une des revendications précédentes, **caractérisée par le fait que**
des moyens, affectés à la transmission de données, incluent un capteur à ondes de surface qui peut être interrogé au moyen d'ondes radar.

7. Machine électrique selon au moins l'une des revendications précédentes, **caractérisée par le fait que**
des moyens, affectés à la transmission de données, incluent des moyens dévolus à la modulation de composantes supérieures de courant qui sont transmises par l'intermédiaire du couplage inductif.

8. Machine électrique selon au moins l'une des revendications précédentes, **caractérisée par le fait que**
les moyens, affectés à la transmission de données, incluent au moins un enroulement supplémentaire sur le rotor et/ou sur le stator, couplés mutuellement par induction.

9. Machine électrique selon au moins l'une des revendications précédentes, **caractérisée par le fait que**,
dans le cas où l'enroulement primaire est disposé axialement en vis-à-vis de l'enroulement secondaire (7), ledit enroulement primaire peut être placé dans la région axiale d'un palier de l'arbre moteur, c'est-à-dire notamment placé en entourant ledit palier dans le sens radial.

10. Machine électrique selon au moins l'une des revendications précédentes, **caractérisée par**
l'alimentation, à partir de l'enroulement secondaire (7), d'un actionneur de puissance au moyen duquel la puissance délivrée à l'enroulement excitateur (5) peut être commandée, sachant notamment qu'une valeur de mesure détectée peut être régulée pour se muter en une valeur de consigne.
